# DEMANDE DE BREVET EUROPEEN

(11) **EP 2 296 308 A1**
(43) Date de publication de la demande: **16.03.2011**
(21) Numéro de dépôt: 10176700.2
(22) Date de dépôt: 14.09.2010
(51) Int. Cl.: H04L 9/32

(54) **Procédé de signature de chiffrement de messages à sécurité renforcée, procédé de vérification de signature, dispositifs et produits programmes d'ordinateur correspondants**

(30) Priorité: 15.09.2009 FR 0956338
(71) Demandeur: Compagnie Industrielle et Financière d'Ingénierie "Ingenico", 92200 Neuilly sur Seine (FR)
(72) Inventeur: Pointcheval, David, 94320, THIAIS (FR); Naccache, David, 75018, PARIS (FR); Polechtchouk, Pavel, 75018, PARIS (FR)
(74) Mandataire: Bioret, Ludovic

(57) **Abrégé**

L'invention concerne un procédé de signature cryptographique de messages à sécurité renforcée, mettant en oeuvre deux ensembles d'algorithmes de signature SA1={K1,S1,V1} et SA2={K2,S2,V2}, où Ki, Si et Vi sont respectivement des algorithmes de génération de clés, de signature et de vérification de signatures, et comprenant :
- une étape de génération de clés permanentes, à l'aide de l'algorithme K1, délivrant un couple de clés privée et publique {sk1,pk1} ;

et, pour au moins un message m à signer :
- une étape de signature comprenant les sous-étapes suivantes :
- réception dudit message *m* à signer ;
- génération, à l'aide de l'algorithme K2, d'une paire de clés éphémère {sk2,pk2} ;
- calcul, par l'algorithme de signature S2, de la signature s2 du message m au moyen de la clé privée sk2 ;
- calcul, par l'algorithme de signature S1, de la signature c1 de la clé publique pk2 au moyen de la clé privée sk1 ;
- fourniture de la signature renforcée {s2,c1,pk2}.

## Description

### 1. Domaine de l'invention

Le domaine de l'invention est celui des systèmes de signature numérique de messages, et notamment des systèmes cryptographiques de type « signature numérique à clé publique ».

Plus particulièrement, l'invention s'applique à la sécurisation des signatures numériques, notamment contre des attaques destinées à les contrefaire.

### 2. Art antérieur

### 2.1 Systèmes de signature numérique à clé publique

Les systèmes de signature numérique de messages sont basés sur l'utilisation d'une paire de clés asymétriques, composée d'une clé publique de vérification pk et d'une clé privée, ou secrète, de signature sk.

De tels systèmes comprennent classiquement un dispositif de signature (par exemple une carte de paiement) et un dispositif de vérification (par exemple un terminal de paiement). La signature d'un message ne peut être générée que par le dispositif de signature, seul à posséder sk. Par contre, la vérification de la signature numérique peut être effectuée par n'importe quel dispositif, la clé publique utilisée pour la vérification étant par définition connue de tout le monde.

Plus précisément, un système de signature numérique comprend trois dispositifs {K, S, V}, mettant en oeuvre respectivement un algorithme de génération de clé pour le dispositif de génération de clés K, un algorithme de signature pour le dispositif de signature S et un algorithme de vérification de signature pour le dispositif de vérification V.

Par la suite, cet ensemble d'algorithmes est appelé génériquement ensemble d'algorithmes de signature.

Le dispositif de génération de clés K permet de générer des couples de clés {pk,sk}, telles que la clé publique pk est liée mathématiquement à la clé secrète sk.

Le dispositif de signature S présente deux entrées, correspondant d'une part au message à signer *m* et d'autre part à la clé secrète sk, et une sortie, correspondant à la signature notée s=S(m,sk) du message *m*, générée au moyen de la clé secrète sk.

Le dispositif de vérification V présente quant à lui trois entrées, correspondant au message signé *m*, à la signature s générée par le dispositif de signature et à la clé publique pk, et une sortie binaire b=V(m,s,pk) (b prenant la valeur « vrai » ou la valeur « faux »). b correspond à une validation ou non de la signature s du message *m* au moyen de la clé publique pk.

De tels systèmes de signature sont notamment utilisés dans le cadre de la sécurisation de système d'informations et de transactions électroniques.

### 2.2 Attaques contre la sécurité de systèmes de signature numérique

La sécurité de systèmes de signature numérique tels que décrits précédemment est une préoccupation importante pour les fournisseurs de tels systèmes, ces derniers pouvant par exemple être utilisés pour la sécurisation de transactions bancaires, le contrôle d'accès ou les télécommunications et devant donc présenter une sécurité maximale, notamment face à des attaquants qui chercheraient à contrefaire des signatures numériques produites par de tels systèmes.

Une contrefaçon est un couple (m',s') qui, tout en étant produit par une autre entité que le dispositif de signature S (donc ne disposant pas de sk), est accepté par le dispositif de vérification V.

Classiquement, une attaque en contrefaçon contre un système de signature numérique consiste à fournir au dispositif de signature S un grand nombre de messages à signer (requêtes de signature) et à observer chaque signature générée avant de soumettre au dispositif de signature S le prochain message à signer, afin d'acquérir la capacité de contrefaire, c'est-à-dire d'imiter (parfaitement ou partiellement) le fonctionnement du dispositif de signature.

Quand elles réussissent, de telles attaques permettent donc d'obtenir des contrefaçons valides de certains messages, sans pour autant soumettre ces messages au dispositif de signature S.

Une technique d'évaluation traditionnelle de la sécurité d'un système de signature numérique consiste à borner (estimer) le nombre de requêtes de signature nécessaires à l'attaquant avant d'acquérir la capacité de contrefaire, c'est-à-dire de générer des signatures sans l'aide du signataire légitime.

La manière classique de renforcer la sécurité des systèmes de signature numérique consiste à augmenter la complexité mathématique des algorithmes mis en oeuvre dans les dispositifs de signature, de façon à les rendre plus résistants à un nombre très grand de requêtes de signatures faites par un attaquant.

Un inconvénient de cette technique réside dans le fait que les algorithmes de signature modernes sont donc plus complexes à concevoir et à exécuter, rendant cette approche de sécurisation de signatures numériques coûteuse à mettre en oeuvre, en termes de temps et de composants électroniques.

### 3. Objectifs de l'invention

L'invention a notamment pour objectif de pallier ces inconvénients de l'art antérieur.

Plus précisément, un objectif de l'invention est de fournir une technique permettant de renforcer la sécurité de systèmes de signature numérique, de façon efficace, fiable et peu coûteuse et simple à mettre en oeuvre.

### 4. Exposé de l'invention

L'invention propose une solution nouvelle qui ne présente pas l'ensemble de ces inconvénients de l'art antérieur, sous la forme d'un procédé de signature cryptographique à sécurité renforcée.

Selon l'invention, ce procédé de signature à sécurité renforcée met en oeuvre deux ensembles d'algorithmes de signature SA1={K1,S1,V1} et SA2={K2,S2,V2}, où Ki, Si et Vi sont respectivement des algorithmes de génération de clés, de signature et de vérification de signatures, et comprend :
- une étape de génération de clés permanentes, à l'aide de l'algorithme K1, délivrant un couple de clés privée et publique {sk1,pk1} ;
   et, pour au moins un message *m* à signer :
- une étape de signature comprenant les sous-étapes suivantes :
   - réception dudit message *m* à signer ;
   - génération, à l'aide de l'algorithme K2, d'une paire de clés éphémère {sk2,pk2} ;
   - calcul, par l'algorithme de signature S2, de la signature s2 du message *m* au moyen de la clé privée sk2 ;
   - calcul, par l'algorithme de signature S1, de la signature c1 de la clé publique pk2 au moyen de la clé privée sk1 ;
   - fourniture de la signature renforcée {s2,c1,pk2}.

Ainsi, l'invention repose sur une approche nouvelle et inventive de la sécurisation des systèmes de signature cryptographique de messages, et notamment des systèmes utilisant une paire de clés asymétriques en mettant en oeuvre une paire de clés asymétriques éphémères permettant de ne pas fournir d'informations sur la clé secrète sk1.

Selon un mode de réalisation de l'invention, ladite étape de signature est mise en oeuvre pour chaque message *m* à signer ou périodiquement en fonction d'un niveau de sécurité désiré.

Ainsi, si le niveau de sécurité désiré est très élevé, le procédé selon ce mode de réalisation de l'invention permet de générer la paire de clés éphémère {sk2,pk2} pour chaque nouveau message *m* à signer, de façon à ce que la clé secrète éphémère ne serve qu'une fois et ne soit pas réutilisée pour signer un autre message.

De cette manière, un potentiel attaquant qui chercherait à contrefaire des signatures produites par un tel système, en soumettant des messages à signer, appelés requêtes de signature, et en observant les signatures générées, ne pourrait pas influencer le système en tirant partie de ces requêtes de signature successives, car pour chaque message à signer, une nouvelle paire de clés éphémères est générée. Aucune inférence ne peut exister entre deux signatures successives. De telles attaques sont donc rendues inefficaces.

Si le niveau de sécurité est moins élevé, la génération de la paire de clés éphémère {sk2,pk2} peut se faire périodiquement, par exemple tous les n messages *m* à signer. Ce mode de réalisation est moins coûteux en terme de génération de clés et offre une sécurité renforcée dans la mesure où une même clé secrète éphémère n'est utilisée qu'un nombre restreint de fois ne permettant pas à un attaquant potentiel d'influencer le système en tirant partie de requêtes de signature successives.

Selon un mode de réalisation de l'invention, ledit algorithme de signature S2 met en oeuvre une fonction de hachage H et ladite étape de fourniture fournit également au moins un nombre aléatoire r, utilisé par ladite fonction de hachage H.

Cela permet de renforcer encore la sécurité en mettant en oeuvre une fonction de hachage pour la signature du message.

Selon un aspect particulier de l'invention, les algorithmes K1 et K2, S1 et S2 et/ou V1 et V2 sont identiques deux à deux.

Selon un mode de réalisation de l'invention, SA1 et/ou SA2 comprennent des algorithmes de type RSA (pour « Rivest Shamir Adleman »).

Selon un autre mode de réalisation de l'invention, SA1 et/ou SA2 comprennent des algorithmes de type DSA (pour « Digital Signature Algorithme »).

Selon un aspect particulier de l'invention, le procédé de signature comprend également une étape de génération d'une paire de clés publique et secrète {skh,pkh} par un algorithme de génération Kh mis en oeuvre par l'un des algorithmes de vérification Vi, et ladite étape de signature met en oeuvre une fonction de hachage H, connue des algorithmes de vérification Vi, telle que h = Hpkh(*m*; r), où r un nombre aléatoire. Ladite signature renforcée correspond au triplet (S2(h),c1,pk2).

En particulier, ladite fonction de hachage est du type « caméléon ». La mise en oeuvre de ces clés {skh,pkh} par un algorithme de génération Kh et l'utilisation de la fonction de hachage H permet de renforcer encore la sécurité de la signature.

L'invention concerne également un procédé de vérification de signature cryptographique de messages à sécurité renforcée, mettant en oeuvre deux algorithmes V1 et V2 de vérification de signatures, et comprenant une phase de vérification conjointe de signatures générées selon le procédé de signature cryptographique de messages à sécurité renforcée selon la revendication 1, ladite phase de vérification comprenant, pour un message *m* signé à vérifier, les étapes suivantes de :
- réception d'un triplet de signature renforcée {s2,c1,pk2} ;
- vérification, à l'aide d'un algorithme de vérification V2 et d'une clé publique pk2, de la signature s2 du message *m*, délivrant un premier résultat positif ou négatif ;
- vérification, à l'aide d'un algorithme de vérification V1 et d'une clé publique pk1, de la signature c1 de la clé publique pk2, délivrant un second résultat positif ou négatif ;
- délivrance d'un résultat de vérification positif si les premiers et seconds résultats sont positifs.

Ainsi, le procédé de vérification selon l'invention, après réception d'une signature générée par le procédé de signature tel que décrit précédemment, sous la forme d'un triplet de signature renforcée, doit mettre en oeuvre deux vérifications avant de valider, ou non, la signature du message m.

Selon un mode de réalisation de l'invention, ladite étape de réception comprend en outre la réception d'au moins un nombre aléatoire r.

En effet, lorsque le procédé de signature met en oeuvre une fonction de hachage, comme décrit ci-dessus, un nombre aléatoire r est utilisé pour la signature et également nécessaire pour la vérification de la signature.

Un autre aspect de l'invention concerne un dispositif de signature cryptographique de messages à sécurité renforcée, mettant en oeuvre deux ensembles d'algorithmes de signature SA1={K1,S1,V1} et SA2={K2,S2,V2}, où Ki, Si et Vi sont respectivement des algorithmes de génération de clés, de signature et de vérification de signatures, et des moyens de génération de clés permanentes, à l'aide de l'algorithme K1, délivrant un couple de clés privée et publique {sk1,pk1}. Selon l'invention, n tel procédé met également en oeuvre, pour au moins un message *m* à signer, des moyens de signature comprenant :
- des moyens de réception dudit message *m* à signer ;
- des moyens de génération, à l'aide de l'algorithme K2, d'une paire de clés éphémère {sk2,pk2} ;
- des moyens de calcul, par l'algorithme de signature S2, de la signature s2 du message *m* au moyen de la clé privée sk2 ;
- des moyens de calcul, par l'algorithme de signature S1, de la signature c1 de la clé publique pk2 au moyen de la clé privée sk1 ;
- des moyens de fourniture de la signature renforcée {s2,c1,pk2}.

Un tel dispositif est notamment apte à mettre en oeuvre les étapes du procédé de signature tel que décrit précédemment. Un tel dispositif de signature est par exemple une carte de paiement.

L'invention concerne également un dispositif de vérification de signature cryptographique de messages à sécurité renforcée, mettant en oeuvre deux algorithmes V1 et V2 de vérification de signatures, et des moyens de vérification conjointe de signatures générées par le dispositif de signature cryptographique de messages à sécurité renforcée tel que décrit ci-dessus.

Selon l'invention, lesdits moyens de vérification mettent en oeuvre, pour un message *m* signé à vérifier :
- des moyens de réception d'un triplet de signature renforcée {s2,c1,pk2} ;
- des moyens de vérification, à l'aide d'un algorithme de vérification V2 et d'une clé publique pk2, de la signature s2 du message *m*, délivrant un premier résultat positif ou négatif ;
- des moyens de vérification, à l'aide d'un algorithme de vérification V1 et d'une clé publique pk1, de la signature c1 de la clé publique pk2, délivrant un second résultat positif ou négatif ;
- des moyens de délivrance d'un résultat de vérification positif si les premiers et seconds résultats sont positifs.

Un tel dispositif de vérification est notamment apte à mettre en oeuvre les étapes du procédé de vérification tel que décrit précédemment. Un tel dispositif de vérification peut être un terminal de paiement.

L'invention concerne encore un système de vérification de signature cryptographique de messages à sécurité renforcée, comprenant un dispositif de signature cryptographique et un dispositif de vérification de signature cryptographique tels que décrits précédemment.

Enfin, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de signature cryptographique tel que décrit précédemment, ainsi qu'un produit programme d'ordinateur téléchargeable depuis un réseau de communication et/ou enregistré sur un support lisible par ordinateur et/ou exécutable par un processeur, **caractérisé en ce qu**'il comprend des instructions de code de programme pour la mise en oeuvre du procédé de vérification de signature cryptographique de messages à sécurité renforcée tel que décrit précédemment.

### 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre les principales étapes du procédé de signature cryptographique selon un mode de réalisation particulier de l'invention ;
- la figure 2 illustre les principales étapes du procédé de vérification de signatures cryptographiques générées selon le procédé de la figure 1, selon un mode de réalisation particulier de l'invention ;
- la figure 3 illustre un exemple de système mettant en oeuvre l'invention, selon un mode de réalisation particulier de l'invention ;
- la figures 4 présente un exemple de réalisation de l'invention ;
- les figures 5 et 6 présentent respectivement la structure d'un dispositif de signature et d'un dispositif de vérification mettant en oeuvre respectivement les techniques de signature et de vérification selon un mode de réalisation de l'invention.

### 6. Description d'un mode de réalisation de l'invention

### 6.1. Principe général

Le principe général de l'invention repose sur la mise en oeuvre, dans un système de signature numérique de messages, d'un couple de clés asymétriques éphémères {sk2, pk2}, en plus d'un couple de clés asymétriques permanent {sk1, pk1} classiquement utilisé, pour la signature de chaque message, et ce dans le but de renforcer la sécurité d'un tel système de signature.

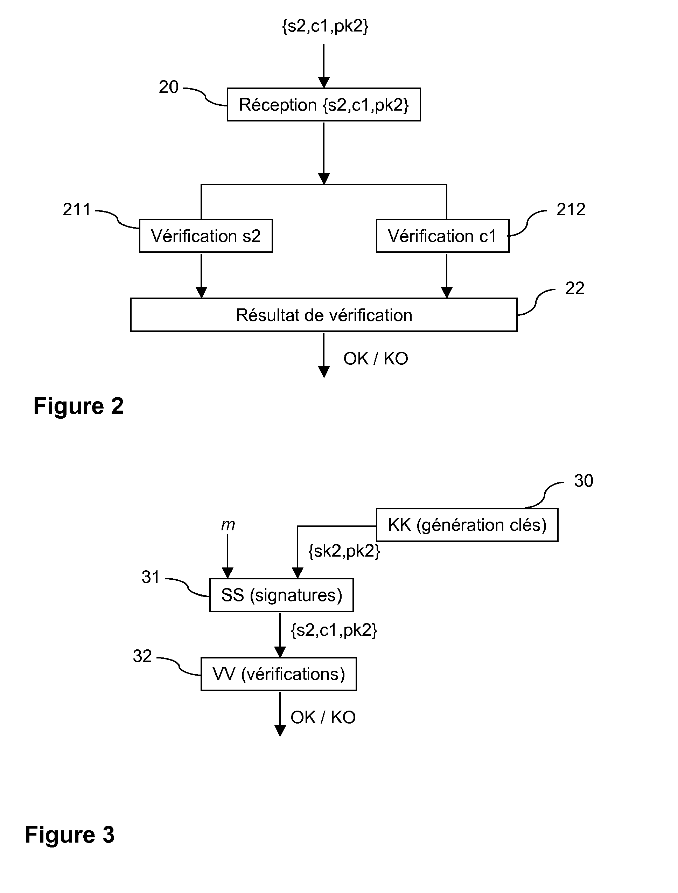

Selon un mode de réalisation de l'invention, illustré en figure 3, un tel système de signature comprend un dispositif 30 de génération de clés KK, un dispositif 31 de signature SS, ou signataire SS, et un dispositif 32 de vérification VV.

Ainsi, pour chaque message *m* à signer, une clé publique pk2 et une clé privée sk2 éphémères sont générées par le dispositif de génération de clés KK à l'aide d'un algorithme K2. La clé privée sk2 est utilisée par un algorithme de signature S2 du signataire SS, pour signer le message *m* et produire une signature s2=S2(*m*, sk2).

Immédiatement après le calcul de la signature s2, la clé éphémère sk2 est effacée. Un couple de clés éphémères {sk2, pk2} n'est donc utilisé qu'une seule fois et l'algorithme K2 génère à la volée autant de couples {sk2,pk2} que de messages soumis pour signature.

Le signataire SS calcule également le certificat c1=S1(pk2,sk1), en signant pk2 à l'aide de sa clé permanente sk1.

La signature, appelée signature renforcée, comporte trois éléments : c1, pk2 et s2.

Le destinataire de la signature (le dispositif de vérification VV) vérifie, à l'aide des algorithmes de vérification V1 et V2, que V2(*m*,s2,pk2)=vrai et que V1(pk2,c1,pk1)=vrai.

La sécurité améliorée résulte de deux observations :
- un couple de clés éphémère ne sert qu'une seule fois et ne peut donc faire l'objet de multiples requêtes de signature de la part d'un attaquant ;
- la clé secrète permanente sk1 ne sert qu'à signer pk2, donnée qui n'est pas sous le contrôle de l'attaquant éventuel.

Ainsi, à partir de deux ensembles d'algorithmes de signature classiques {K1,S1,V1} et {K2,S2,V2}, le procédé selon ce mode de réalisation de l'invention permet de construire un nouvel ensemble d'algorithmes de signature numérique renforcés {KK,SS,VV}.

Comme il apparaîtra clairement à l'homme de l'art, une très grande combinatoire de choix d'algorithmes pour {K1,S1,V1} et {K2,S2,V2} est possible. De plus, comme déjà indiqué, rien n'exclut de choisir K1=K2, S1=S2, et V1=V2.

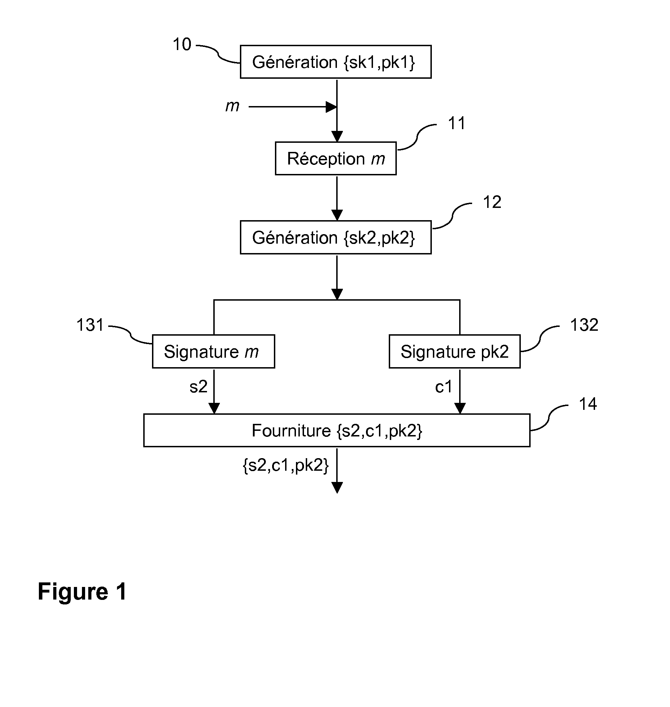

Les figures 1 et 2 illustrent plus en détails ce mode de réalisation de l'invention, respectivement pour le procédé de signature et le procédé de vérification de signature.

Dans un 1^{er} temps, lors d'une étape 10 de génération de clés, l'algorithme K1 génère un couple de clés asymétriques permanent {sk1, pk1}.

Après une étape 11 de réception d'un message *m* à signer, l'algorithme K2 génère, lors d'une étape 12 de génération, un couple de clés asymétriques éphémères {sk2, pk2}.

Le signataire SS met alors en oeuvre un algorithme de signature S2 calculant, lors d'une étape 131, la signature s2 du message *m*, telle que s2=S2(*m*, sk2) et un algorithme de signature S1 calculant, lors d'une étape 132, le certificat c1=S1(pk2,sk1), en signant pk2 à l'aide de la clé permanente sk1.

Enfin, lors d'une étape 14 de fourniture, la signature renforcée {c1,pk2,s2} est délivrée, en vue d'une vérification.

Cette signature renforcée est donc reçue, lors d'une étape 20 de réception, par le dispositif de vérification, qui met en oeuvre les algorithmes de vérification V1 et V2 pour délivrer un résultat de vérification positif ou négatif, validant ou non la signature renforcée reçue.

Lors des étapes 211 et 212 de vérification, les signatures s2 et c1 sont vérifiées, c'est-à-dire que les algorithmes V2 et V1 vérifient respectivement que V2(*m*,s2,pk2)=vrai et que V1(pk2,c1,pk1)=vrai.

Si c'est deux résultats sont vrais, alors le résultat de vérification 22 est « OK ». Si l'une au moins des deux vérifications a échoué, alors le résultat de vérification est « KO ».

Les paragraphes suivants décrivent certains exemples de mise en oeuvre de l'invention avec des algorithmes de signature spécifiques.

### 6.2. Modes de réalisation à base de « signatures caméléon ».

### 6.2.1. Principe général d'un schéma de signature caméléon

Un schéma de signature « caméléon » utilise une fonction de hachage caméléon et un schéma de signature « classique » (RSA, DSA, ...).

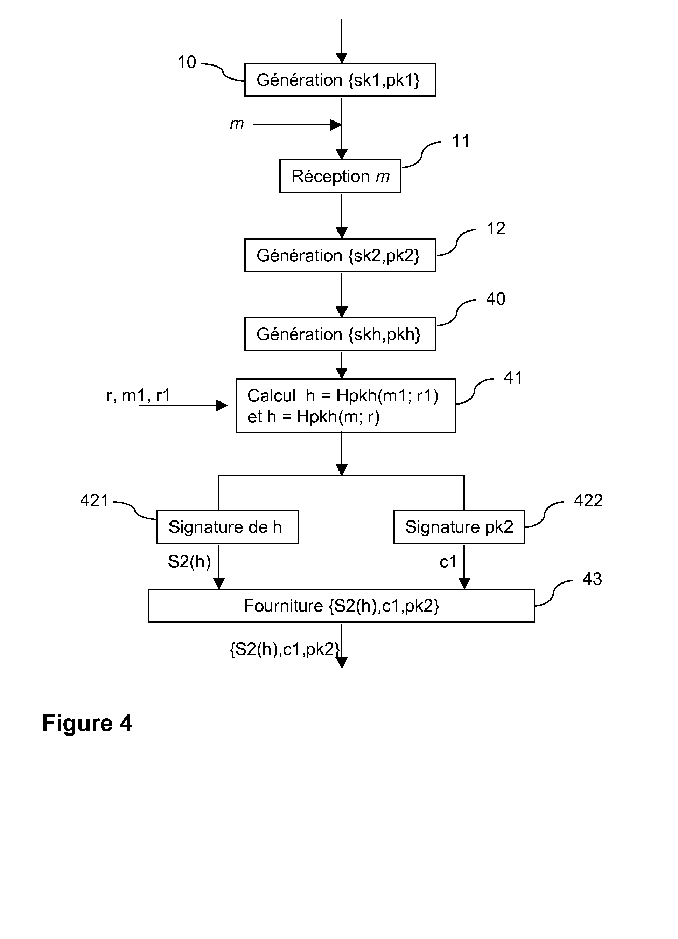

Dans un tel schéma de signature selon ce mode de réalisation de l'invention, illustré par la figure 4, on considère un signataire SS, mettant en oeuvre des algorithmes de signature S1 et S2 et un dispositif de vérification VV, mettant en oeuvre des algorithmes de vérification V1 et V2. Ce dispositif de vérification VV comprend également un algorithme de génération de clés Kh. Le schéma de signature comprend en outre des algorithmes de génération de clés K1 et K2, générant respectivement un couple de clés publique pk1 et privée sk1 et un couple de clés éphémères publique pk2 et privée sk2, comme déjà décrit ci-dessus.

Le principe d'un tel schéma de signature repose sur l'application d'une fonction de hachage caméléon au message *m* à signer, délivrant une empreinte h du message *m*, puis sur la signature de cette empreinte h par l'algorithme de signature S1.

Une fonction de hachage caméléon, telle que décrite notamment dans le document « H.Krawczyk and T.Rabin. Chameleon Hashing and Signatures. 2000 Symposyum on Network and Distributed System Security Symposium (NDSS'00), Feb 2000 », peut être vue comme une signature à usage unique : la fonction caméléon H utilise une clé publique pkh afin de calculer l'empreinte h = Hpkh(m; r), où m est un message à signer et r un aléa. Une clé secrète skh est associée à la clé publique pkh. Ces deux clés pkh et skh sont générées par un algorithme Kh du dispositif de vérification VV. Ce dernier a donc connaissance de skh.

Les propriétés d'une fonction caméléon sont les suivantes :
- résistance à la collision (c'est-à-dire que deux messages distincts doivent avoir très peu de chances de produire la même signature) : étant donnée la clé publique pkh, il est difficile de trouver un couple (m1; r1) différent d'un couple (m2; r2) tels que Hpkh(m1; r1) = Hpkh(m2; r2);
- uniformité : étant donnée une information de trappe secrète skh, il est facile, étant donnés un couple (m1; r1) et m2, de calculer un r2 tel que Hpkh(m1; r1) = Hpkh(m2; r2);

Dans un premier temps, l'algorithme de génération de clés Kh de la fonction caméléon génère les clés secrète skh et publique pkh, lors d'une étape 40, qui fait suite aux étapes 10, 11 et 12 déjà décrites en relation avec la figure 1.

Ensuite, lors d'une étape 41, le signataire SS sélectionne un message aléatoire m1, et un aléa r1 et calcule, en appliquant la fonction de hachage, l'empreinte h = Hpkh(m1; r1).

Lorsque le signataire SS reçoit le message m à signer, il construit, à partir de la clé secrète skh et du couple (m1; r1), le nombre r tel que h = Hpkh(m1; r1) = Hpkh(*m*; r).

Il calcule également, lors d'une étape 421, avec l'algorithme de signature S2, la signature sigh2 de l'empreinte h telle que sigh2 = S2(h), à l'aide de la clé privée sk2, aussitôt effacée comme indiqué précédemment dans le principe général.

La signature du message *m* correspond ici à un triplet (m, r, sigh2). Cette signature peut être vérifiée par l'algorithme de vérification VV, grâce à la relation h = Hpkh(m; r), et à l'aide des clés publiques pkh et pk2.

Le signataire SS calcule également, lors d'une étape 422, le certificat c1=S1(pk2, sk1), à l'aide de l'algorithme S1 et de la clé privée permanente sk1.

La signature renforcée selon ce mode de réalisation de l'invention consiste donc en un triplet (c1, pk2, sigh2), fournit lors d'une étape 43, en vue d'une vérification.

Le dispositif de vérification reçoit ce triplet, lui permettant dans un premier temps de vérifier la validité de la signature c1 (à l'aide de l'algorithme de vérification V1 et des clés publiques pk1 et pk2). Le nombre aléatoire r, construit par le signataire SS, est également transmis au dispositif de vérification, lui permettant dans un deuxième temps de vérifier la validité de sigh2 (à l'aide de l'algorithme de vérification S2, du message *m* et des clés publiques pkh et pk2).

Ainsi, l'invention a pour objectif de renforcer la construction proposée en incluant partiellement ou totalement la clé publique dans le haché du message à signer. Selon ce mode de réalisation, au moins d'un des deux algorithmes de signatures {K, S, V} utilisé dans le procédé inventif serait modifié ainsi :

Le dispositif de génération de clés K permet de générer des couples de clés {pk,sk}, telles que la clé publique pk est liée mathématiquement à la clé secrète sk.

Le dispositif de signature S présente deux entrées, correspondant d'une part au message à signer m et d'autre part à la clé secrète sk, et une sortie, correspondant à la signature notée s=S(h(m,pk),sk) du message *m*, générée au moyen de la clé secrète sk, avec h une fonction de hachage

Le dispositif de vérification V présente quant à lui trois entrées, correspondant au haché du message signé *m* et de la clé publique, à la signature s générée par le dispositif de signature et à la clé publique pk, et une sortie binaire b=V(h(m,pk),s,pk) (b prenant la valeur « vrai » ou la valeur « faux »). b correspond à une validation ou non de la signature s du message *m* au moyen de la clé publique pk.

Nous présentons ci-dessous des exemples de réalisation de l'invention à base de fonction de hachage caméléon.

### 6.2.2. Exemple de fonction de hachage caméléon à base du problème du logarithme discret

L'article « H.Krawczyk and T.Rabin. Chameleon Hashing and Signatures. 2000 Symposyum on Network and Distributed System Security Symposium (NDSS'00), Feb 2000 », décrit notamment une telle fonction de hachage.

Il est nécessaire d'utiliser les paramètres suivants :
- des nombres premiers p et q tel que p = kq+1, avec q un nombre premier suffisamment grand ;
- un élément g, d'ordre q dans Zp* (i.e c'est est un générateur du groupe G=<g> d'ordre q)
- la clé privée sk=x est un nombre aléatoire choisi dans Zq*, et
- la clé publique pk=y est définie par y=g^{x} mod p

La fonction de hachage caméléon, selon ce mode de réalisation, pour un message *m* appartenant à Zq* et un nombre aléatoire r appartenant à Zq*, est définie de la sorte : h = Hpk(m; r) = g^{m}.y^{r} mod p

Cette fonction de hachage présente une uniformité parfaite, car y est lui aussi un générateur. En effet, même s'il est clair qu'une collision permet de résoudre le problème du logarithme discret de y en base g, étant donné le logarithme discret x, l'empreinte h = g^{m1}.y^{r1}, et un message m2, il est clair également que r2 = r1 + (m1 - m2)/x mod q implique que Hpk(m1; r1) = Hpk(m2; r2). Ainsi y^{r} « cache » m parfaitement, pour un r aléatoire.

### 6.2.3. Exemple de fonction de hachage caméléon à base du problème de l'algorithme RSA.

Considérons un système RSA tel que décrit dans l'article « Rivest, R.; A. Shamir; L. Adleman (1978). "A Method for Obtaining Digital Signatures and Public-Key Cryptosystems". Communications of the ACM 21 (2): 120-126. », à module publique n et à exposant public e.

Les clés secrète et publique sont respectivement sk = x, choisi aléatoirement dans Zn*, et pk = y = x^{e} mod n.

La fonction de hachage est définie par h = Hpk(m; r) = m^{e}.y^{r} mod n.

Une collision implique h = m1^{e}.y^{r1} = m2^{e}.y^{r2}, ce qui induit y^{(r2-r1)} = (m1/m2)^{e} mod n.

Si (r2-r1) est co-premier avec e, alors il devient possible de calculer la racine e-ème de y. Ainsi, il faut fixer e = n.

### 6.3. Mode de réalisation à base du système de signature GHR

Un tel système de signature est notamment décrit dans l'article « R. Gennaro, S. Halevi and T. Rabin, Secure hash-and-sign signatures without the random oracle, proceedings of Eurocrypt'99, LNCS vol. 1592, Springer-Verlag, 1999, pp. 123-139 ».

Dans ce mode de réalisation, on considère que le dispositif de génération de clés KK génère un module RSA fort n=pq et tire au hasard un aléa y dans Zn*. La clé publique pk correspond alors à la paire (n; y), et la clé secrète sk correspond à la paire (p; q).

Lorsque le signataire SS reçoit un message *m*, il applique une fonction de hachage H quelconque afin de calculer le paramètre e = H(*m*) qui sera utilisé par la suite comme un exposant.

La signature du message *m* correspondant à la racine e-ième de y mod n, notée s. Ainsi on a la relation suivante qui doit être vérifiée : s^{e}= y mod n.

Le signataire peut aisément calculer la signature s : en effet, il connaît le paramètre phi(n) = (p-1)(q-1) et peut donc calculer l'élément d tel que le produit de d par e soit égal à 1 modulo phi(n). La signature s est alors y^{d} mod n.

Remarquons que lorsque le paramètre e n'est pas inversible (ce qui peut se produire si e est pair), une méthode pour pallier ce problème peut être d'ajouter à e une valeur prédéterminée (par exemple un) jusqu'à ce que la condition d'inversion soit vérifiée.

### 6.4 Structure des dispositifs de signature et de vérification

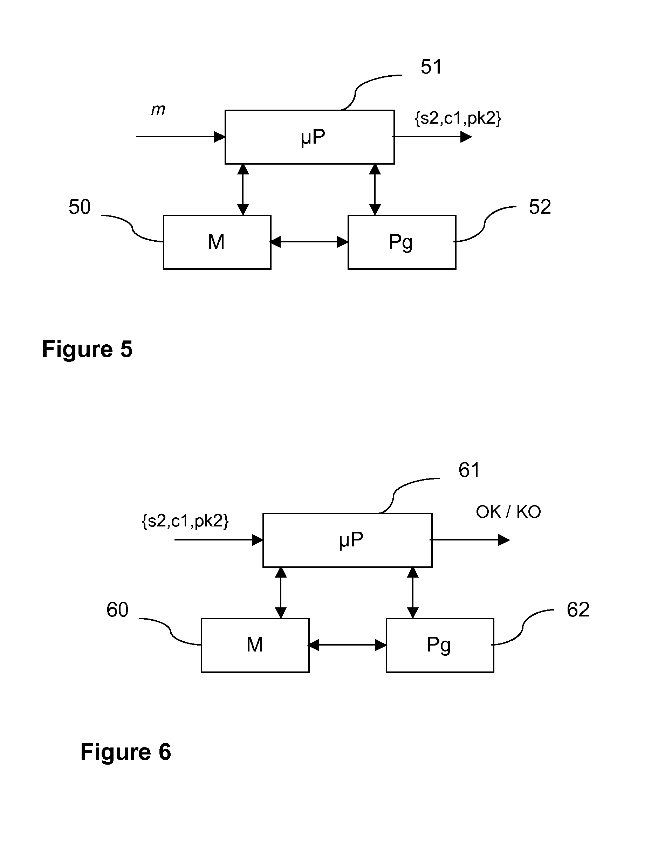

On présente finalement, en relation avec les figures 5 et 6, la structure simplifiée d'un dispositif de signature et d'un dispositif de vérification de signature mettant respectivement en oeuvre en oeuvre une technique de signature et une technique de vérification de signature selon un mode de réalisation de l'invention.

Un tel dispositif de signature comprend une mémoire 51 constituée d'une mémoire tampon, une unité de traitement 52, équipée par exemple d'un microprocesseur µP, et pilotée par le programme d'ordinateur 53, mettant en oeuvre le procédé de signature selon l'invention.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée au moins un message *m* à signer. Le microprocesseur de l'unité de traitement 52 met en oeuvre les étapes du procédé de signature décrit précédemment, selon les instructions du programme d'ordinateur 53. Pour cela, le dispositif de signature comprend, outre la mémoire tampon 51, des moyens de génération de clés permanentes, des moyens de signature comprenant des moyens de réception du message *m* à signer, des moyens de génération d'une paire de clés éphémère, des moyens de calcul de la signature s2 du message *m*, des moyens de calcul de la signature c1 de la clé publique et des moyens de fourniture d'une signature renforcée {s2,c1,pk2}. Ces moyens sont pilotés par le microprocesseur de l'unité de traitement 52.

L'unité de traitement 52 transmet donc au dispositif de vérification une signature renforcée.

Un tel dispositif de vérification comprend une mémoire 61 constituée d'une mémoire tampon, une unité de traitement 62, équipée par exemple d'un microprocesseur µP, et pilotée par le programme d'ordinateur 63, mettant en oeuvre le procédé de vérification selon l'invention.

A l'initialisation, les instructions de code du programme d'ordinateur 63 sont par exemple chargées dans une mémoire RAM avant d'être exécutées par le processeur de l'unité de traitement 62. L'unité de traitement 62 reçoit en entrée une signature renforcée, générée par le dispositif de signature décrit ci-dessus. Le microprocesseur de l'unité de traitement 62 met en oeuvre les étapes du procédé de vérification décrit précédemment, selon les instructions du programme d'ordinateur 63. Pour cela, le dispositif de vérification comprend, outre la mémoire tampon 61, des moyens de vérification conjointe de signature, comprenant des moyens de réception de la signature renforcée {s2,c1,pk2} et des moyens de vérification des signatures s2 et c1. Ces moyens sont pilotés par le microprocesseur de l'unité de traitement 62.

L'unité de traitement 62 délivre un résultat de vérification de la signature renforcée.

## Revendications

1. Procédé de signature cryptographique de messages à sécurité renforcée, **caractérisé en ce qu'**il met en oeuvre deux ensembles d'algorithmes de signature SA1={K1,S1,V1} et SA2={K2,S2,V2}, où Ki, Si et Vi sont respectivement des algorithmes de génération de clés, de signature et de vérification de signatures,
et **en ce qu'**il comprend :
- une étape de génération de clés permanentes, à l'aide de l'algorithme K1, délivrant un couple de clés privée et publique {sk1,pk1} ;
et, pour au moins un message *m* à signer :
- une étape de signature comprenant les sous-étapes suivantes :
- réception dudit message *m* à signer ;
- génération, à l'aide de l'algorithme K2, d'une paire de clés éphémère {sk2,pk2} ;
- calcul, par l'algorithme de signature S2, de la signature s2 du message *m* au moyen de la clé privée sk2 ;
- calcul, par l'algorithme de signature S1, de la signature c1 de la clé publique pk2 au moyen de la clé privée sk1 ;
- fourniture de la signature renforcée {s2,c1,pk2}.

2. Procédé de signature cryptographique de messages à sécurité renforcée selon la revendication 1, **caractérisé en ce que** ladite étape de signature est mise en oeuvre pour chaque message *m* à signer ou périodiquement en fonction d'un niveau de sécurité désiré.

3. Procédé de signature cryptographique de messages à sécurité renforcée selon la revendication 1, **caractérisé en ce que** ledit algorithme de signature S2 met en oeuvre une fonction de hachage et **en ce que** ladite étape de fourniture fournit également au moins un nombre aléatoire r, utilisé par ladite fonction de hachage.

4. Procédé de signature cryptographique de messages à sécurité renforcée selon la revendication 1, **caractérisé en ce que** les algorithmes K1 et K2, S1 et S2 et/ou V1 et V2 sont identiques deux à deux.

5. Procédé de signature cryptographique de messages à sécurité renforcée selon la revendication 1, **caractérisé en ce que** SA1 et/ou SA2 comprennent des algorithmes de type RSA (pour « Rivest Shamir Adleman »).

6. Procédé de signature cryptographique de messages à sécurité renforcée selon la revendication 1, **caractérisé en ce que** SA1 et/ou SA2 comprennent des algorithmes de type DSA (pour « Digital Signature Algorithme »).

7. Procédé de signature cryptographique de messages à sécurité renforcée selon la revendication 3, **caractérisé en ce qu'**il comprend également une étape de génération d'une paire de clés publique et secrète {skh,pkh} par un algorithme de génération Kh mis en oeuvre par l'un des algorithmes de vérification Vi, et **en ce que** ladite étape de signature met en oeuvre une fonction de hachage H, connue des algorithmes de vérification Vi, telle que h = Hpkh(*m*; r), où r est un nombre aléatoire.

8. Procédé de signature cryptographique de messages à sécurité renforcée selon la revendication 7, **caractérisé en ce que** ladite fonction de hachage est du type « caméléon ».

9. Procédé de signature cryptographique de messages à sécurité renforcée selon la revendication 8, **caractérisé en ce que** ladite signature renforcée correspond au triplet (S2(h),c1,pk2).

10. Procédé de vérification de signature cryptographique de messages à sécurité renforcée,
**caractérisé en ce qu'**il met en oeuvre deux algorithmes V1 et V2 de vérification de signatures, et **en ce qu'**il comprend une phase de vérification conjointe de signatures générées selon le procédé de signature cryptographique de messages à sécurité renforcée selon la revendication 1,
ladite phase de vérification comprenant, pour un message *m* signé à vérifier, les étapes suivantes de :
- réception d'un triplet de signature renforcée {s2,c1,pk2} ;
- vérification, à l'aide d'un algorithme de vérification V2 et d'une clé publique pk2, de la signature s2 du message *m*, délivrant un premier résultat positif ou négatif ;
- vérification, à l'aide d'un algorithme de vérification V1 et d'une clé publique pk1, de la signature c1 de la clé publique pk2, délivrant un second résultat positif ou négatif ;
- délivrance d'un résultat de vérification positif si les premiers et seconds résultats sont positifs.

11. Procédé de vérification de signature cryptographique de messages à sécurité renforcée selon la revendication 10, **caractérisé en ce que** ladite étape de réception comprend en outre la réception d'au moins un nombre aléatoire r.

12. Dispositif de signature cryptographique de messages à sécurité renforcée, **caractérisé en ce qu'**il met en oeuvre deux ensembles d'algorithmes de signature SA1={K1,S1,V1} et SA2={K2,S2,V2}, où Ki, Si et Vi sont respectivement des algorithmes de génération de clés, de signature et de vérification de signatures,
et **en ce qu'**il met en oeuvre :
- des moyens de génération de clés permanentes, à l'aide de l'algorithme K1, délivrant un couple de clés privée et publique {sk1,pk1} ;
et, pour au moins un message *m* à signer :
- des moyens de signature comprenant :
- des moyens de réception dudit message *m* à signer ;
- des moyens de génération, à l'aide de l'algorithme K2, d'une paire de clés éphémère {sk2,pk2} ;
- des moyens de calcul, par l'algorithme de signature S2, de la signature s2 du message *m* au moyen de la clé privée sk2 ;
- des moyens de calcul, par l'algorithme de signature S1, de la signature c1 de la clé publique pk2 au moyen de la clé privée sk1 ;
- des moyens de fourniture de la signature renforcée {s2,c1,pk2}.

13. Dispositif de vérification de signature cryptographique de messages à sécurité renforcée,
**caractérisé en ce qu'**il met en oeuvre deux algorithmes V1 et V2 de vérification de signatures, et **en ce qu'**il met en oeuvre des moyens de vérification conjointe de signatures générées par le dispositif de signature cryptographique de messages à sécurité renforcée selon la revendication 12,
lesdits moyens de vérification mettant en oeuvre, pour un message *m* signé à vérifier :
- des moyens de réception d'un triplet de signature renforcée {s2,c1,pk2} ;
- des moyens de vérification, à l'aide d'un algorithme de vérification V2 et d'une clé publique pk2, de la signature s2 du message *m*, délivrant un premier résultat positif ou négatif ;
- des moyens de vérification, à l'aide d'un algorithme de vérification V1 et d'une clé publique pk1, de la signature c1 de la clé publique pk2, délivrant un second résultat positif ou négatif ;
- des moyens de délivrance d'un résultat de vérification positif si les premiers et seconds résultats sont positifs.

14. Système de vérification de signature cryptographique de messages à sécurité renforcée, **caractérisé en ce qu'**il comprend un dispositif de signature cryptographique selon la revendication 12 et un dispositif de vérification de signature cryptographique selon la revendication 13.

15. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de signature cryptographique selon l'une quelconque des revendications 1 à 9.

16. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de vérification de signature cryptographique de messages à sécurité renforcée selon l'une quelconque des revendications 10 et 11.
